# NEUE EUROPÄISCHE PATENTSCHRIFT

(11) **EP 1 728 658 B2**
(45) Veröffentlichungstag und Bekanntmachung des Hinweises auf die Entscheidung über den Einspruch: **29.07.2015**
(45) Hinweis auf die Patenterteilung: 13.08.2008
(21) Anmeldenummer: 05291183.1
(22) Anmeldetag: 01.06.2005
(51) Int. Cl.: B60H 1/00

(54) **Doppel-Gebläseanordnung, insbesondere für eine Kraftfahrzeug-Klimaanlage**
Dual blower unit, in particular for a vehicle air conditioning system
Unité soufflante double, notamment pour dispositif de climatisation de véhicules automobiles

(43) Veröffentlichungstag der Anmeldung: 06.12.2006
(73) Patentinhaber: Mahle Behr France Rouffach S.A.S, 68250 Rouffach (FR)
(72) Erfinder: Broly, Fabien, 68320 Bischwihr (FR); Fuentes, Nicolas, 68124 Logelbach (FR)
(74) Vertreter: Grauel, Andreas

(56) Entgegenhaltungen:
- EP-A- 0 867 319
- DE-A1- 10 008 627
- FR-A- 2 741 842

## Beschreibung

Die Erfindung betrifft eine Doppel-Gebläseanordnung, insbesondere für eine Kraftfahrzeug-Klimaanlage.

EP 0 867 319 gezeigt eine Doppel-Gebläseanordnung, die als basis für den Oberbegriff des Anspruchs 1 gilt. Die FR 2 750 461 A1 offenbart eine Doppel-Gebläseanordnung für ein Kraftfahrzeug mit einem Gebläsemotor, zwei auf Wellen angeordneten Laufrädern und dazugehörigen Gebläse-Spiralgehäusen, die Teil des Gehäuses sind, und einen Lufteinlass, wobei der Gebläsemotor mit den Laufrädern eine Gebläbaugruppe bilden, die als Einheit in Längsrichtung der Wellen aus dem Gehäuse entnehmbar sind.

Bei Kraftfahrzeugen mit Klimaanlagen werden aus Leistungsgründen häufig zwei Gebläse in Form einer symmetrisch ausgebildeten Doppel-Gebläseanordnung verwendet. Dabei ist die Demontage einer derartigen Doppel-Gebläseanordnung im Falle einer Reparatur relativ aufwendig. Die Demontage erfolgt üblicherweise durch die Feuerwand vom Motorraum aus oder über das Armaturenbrett. Dazu ist es erforderlich entsprechende Öffnungen in der Stirnwand vorzusehen oder beispielsweise das Armaturenbrett zu entfernen.

Es ist Aufgabe der Erfindung, eine verbesserte Doppel-Gebläseanordnung zur Verfügung zu stellen, wobei diese möglichst leicht austauschbar ist.

Diese Aufgabe wird gelöst durch eine Doppel-Gebläseanordnung mit den Merkmalen des Anspruchs 1. Vorteilhafte Ausgestaltungen sind Gegenstand der Unteransprüche.

Erfindungsgemäß ist eine Doppel-Gebläseanordnung, insbesondere für eine Kraftfahrzeug-Klimaanlage, mit mindestens einem Gebläsemotor, zwei auf Wellen angeordneten Laufrädern und dazugehörenden Gebläse-Spiralgehäusen, die Teil des Gehäuses sind, und einem Lufteinlass vorgesehen, wobei der oder die Gebläsemotoren mit den Laufrädern eine Gebläsebaugruppe bilden, die als Einheit in Längsrichtung der Wellen aus dem Gehäuse entnehmbar sind. Da das Entfernen der Gebläsebaugruppe in Längsrichtung der Wellen erfolgt, ist eine relativ kleine seitliche Öffnung für eine Demontage und anschließende Montage ausreichend. Dabei kann das gesamte Gehäuse, insbesondere die Gebläse-Spiralgehäuse, im Kraftfahrzeug verbleiben, so dass die Zugänglichkeit für Wartungsarbeiten mit keinem wesentlichen Bauraumverlust verbunden ist. Ferner ist die Abdichtung des Gehäuses, insbesondere gegenüber dem Motorraum, gesichert, da dasselbe nicht ausgebaut werden muss.

Erfindungsgemäß ist am Gehäuse eine Führung ausgebildet, welche das Herausziehen und insbesondere das Einschieben erleichtert. Die Führung wird durch eine Nut im Gehäuse und einen Vorsprung an der Gebläsebaugruppe gebildet, welche in ihren Abmessungen im Wesentlichen übereinstimmen, wobei zur Erleichterung des Einführens eine Aufweitung der Nut an den Enden und/oder eine Abschrägung an den Enden des Vorsprungs vorgesehen sein kann. Die Führung ist bevorzugt im unteren Bereich angeordnet.

Erfindungsgemäß ist in Verbindung mit der Führung - eine Zentrierung für die Lufteinlässe vorgesehen. Da einer der Lufteinlässe im Gehäuse verbleibt, erfolgt automatisch eine Zentrierung der Gehäusebaugruppe und entsprechend des herausgenommenen und wieder eingebauten Lufteinlasses beim Wiedereinbau. Die Zentrierung wird durch eine seitliche Vertiefung in der Gebläsebaugruppe gebildet, die mit einem Vorsprung an entsprechenden Lufteinlass zusammenwirkt. Der Vorsprung steht hierbei bevorzugt in radialer Richtung im Anschlussbereich des Lufteinlasses nach außen vor.

Die Doppel-Gebläseanordnung ist vorzugsweise spiegelbildlich bezüglich der Mittelebene senkrecht zur Längsrichtung der Wellen ausgebildet, so dass die gleiche Ausgestaltung für rechts- und linksgelenkte Kraftfahrzeuge verwendet werden kann. Lediglich im Bereich der Abdeckung für die Doppel-Gebläseanordnung ist gegebenenfalls eine unterschiedliche Ausgestaltung erforderlich, sofern aus bauräumlichen Gründen nur ein Zugang von der Beifahrerseite, aber kein Zugang von der Fahrerseite möglich ist.

Die Doppel-Gebläseanordnung ist bevorzugt Teil einer Kraftfahrzeug-Klimaanlage und ist im Fahrzeuginnenraum, verdeckt durch eine Abdeckung, und benachbart zum Motorraum angeordnet, insbesondere unterhalb des Armaturenbretts, wobei sie vorzugsweise durch Entfernen des Handschuhfachs und eines Luftkanals leicht zugänglich ist, vorzugsweise von der Beifahrerseite aus.

Das Entfernem der Gebläsebaugruppe erfolgt bevorzugt, indem zuerst eine Abdeckung entfernt wird, anschließend die Stange für die Steuerung der Luftklappen gelöst wird, die vorzugsweise außerhalb des Gehäuses verlaufend angeordnet ist. Danach wird der öffnungsseitig angeordnete der beiden Lufteinlässe herausgenommen und anschließend die Gebläsebaugruppe in Längsrichtung der Welle herausgezogen. Gegebenenfalls können zusätzliche Sicherungen für die einzelnen Bauteile vorgesehen sein, die vor der Demontage ebenfalls gelöst werden müssen.

Im Folgenden wird die Erfindung anhand eines Ausführungsbeispiels unter Bezugnahme auf die Zeichnung im Einzelnen erläutert. In der Zeichnung zeigen:

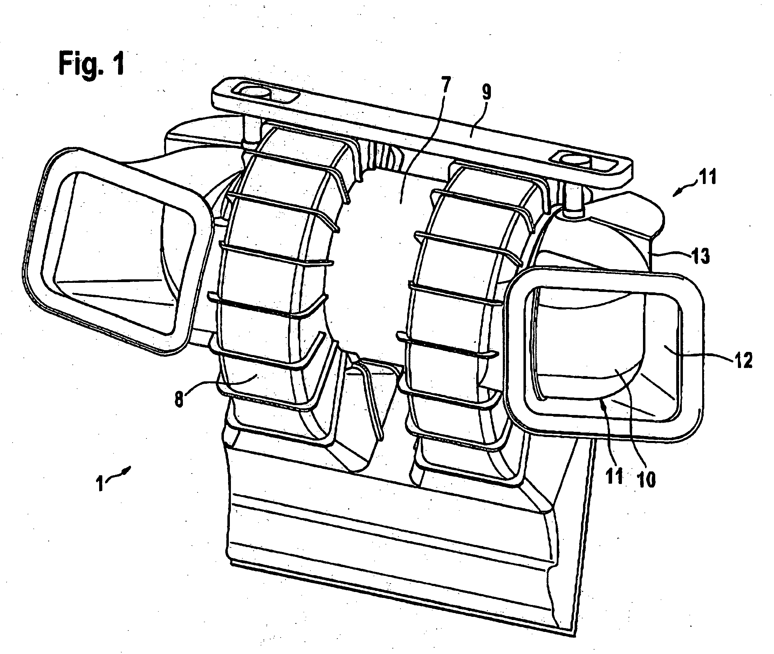

- Fig. 1: eine perspektivische Ansicht einer Doppel-Gebläseanordnung,

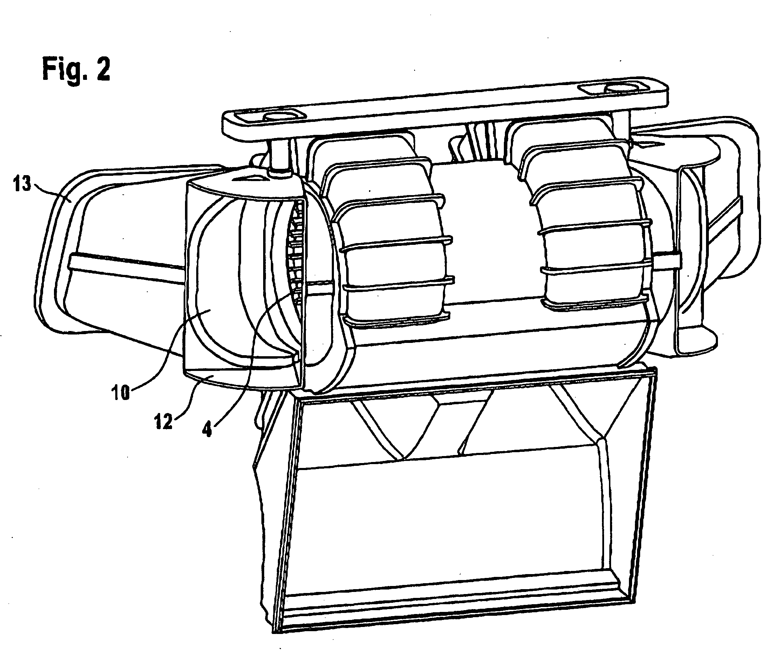

- Fig. 2: eine andere perspektivische Ansicht der Doppel-Gebläseanordnung von Fig. 1,

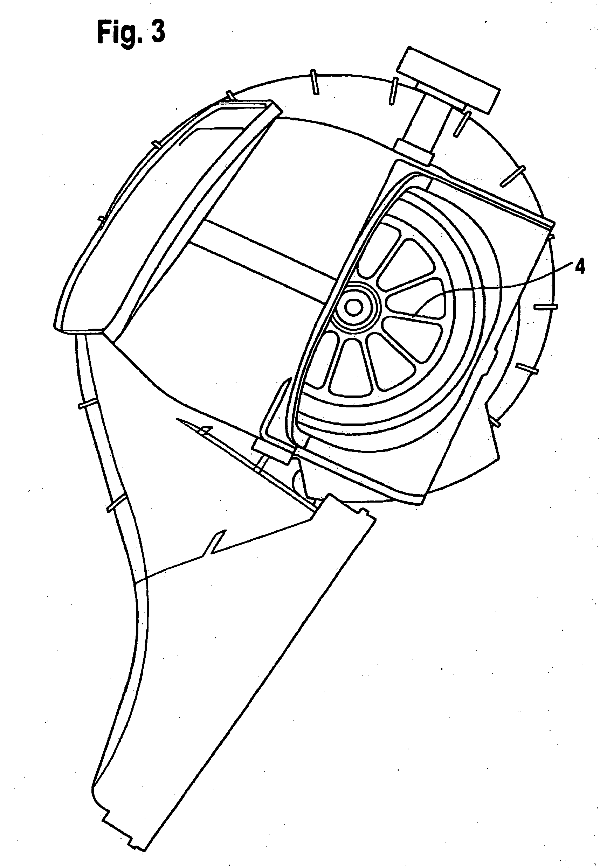

- Fig. 3: eine Seitenansicht der Doppel-Gebläseanordnung,

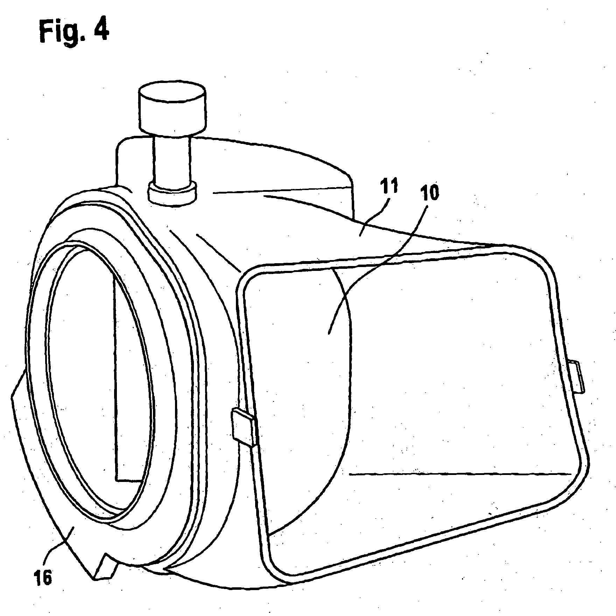

- Fig. 4: eine Ansicht des ausgebauten Lufteinlasses,

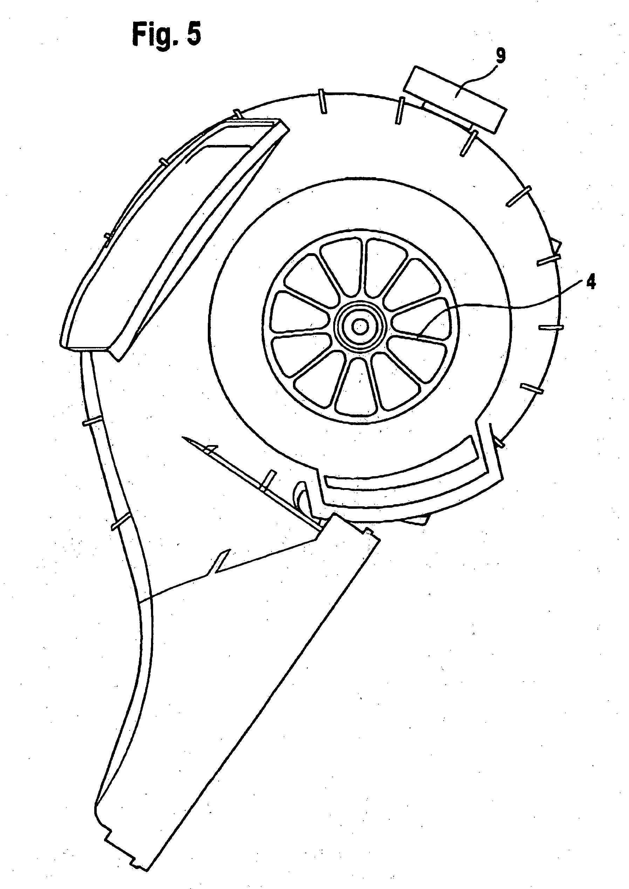

- Fig. 5: eine Seitenansicht nach dem Ausbau des Lufteinlasses,

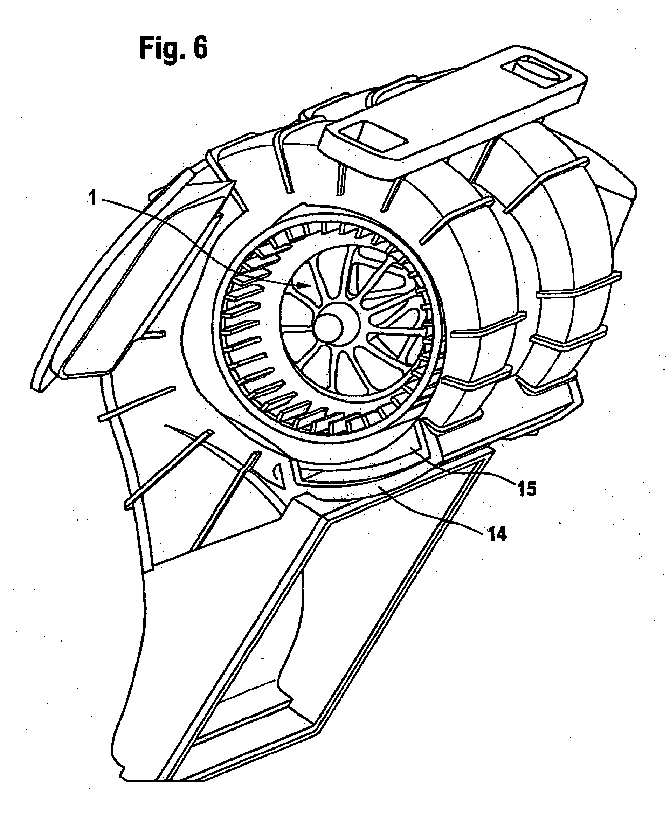

- Fig. 6: eine perspektivische Ansicht der Doppel-Gebläseanordnung gemäß Fig. 5,

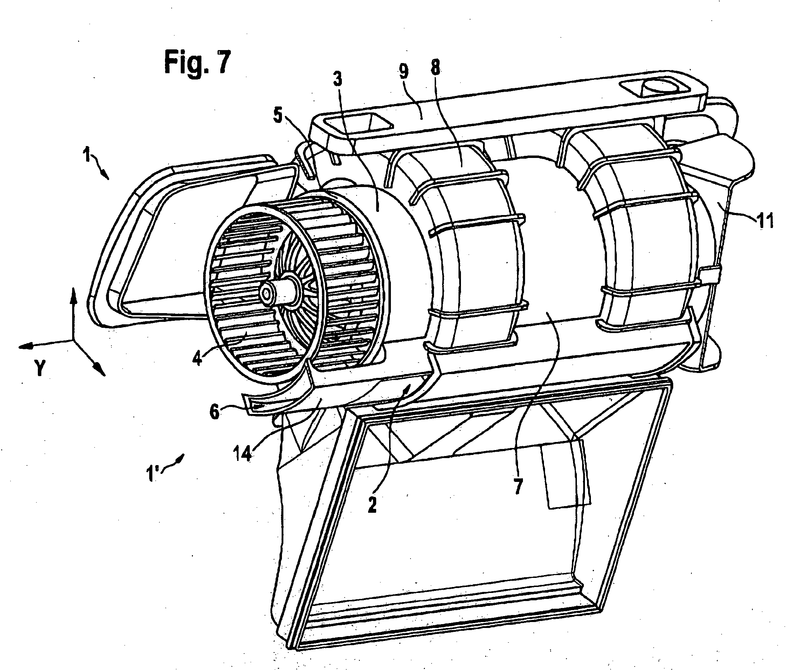

- Fig. 7: eine perspektivische Ansicht während des Herausziehens der Gebläsebaugruppe, und
- Fig. 8: eine perspektivische Ansicht der Gebläsebaugruppe.

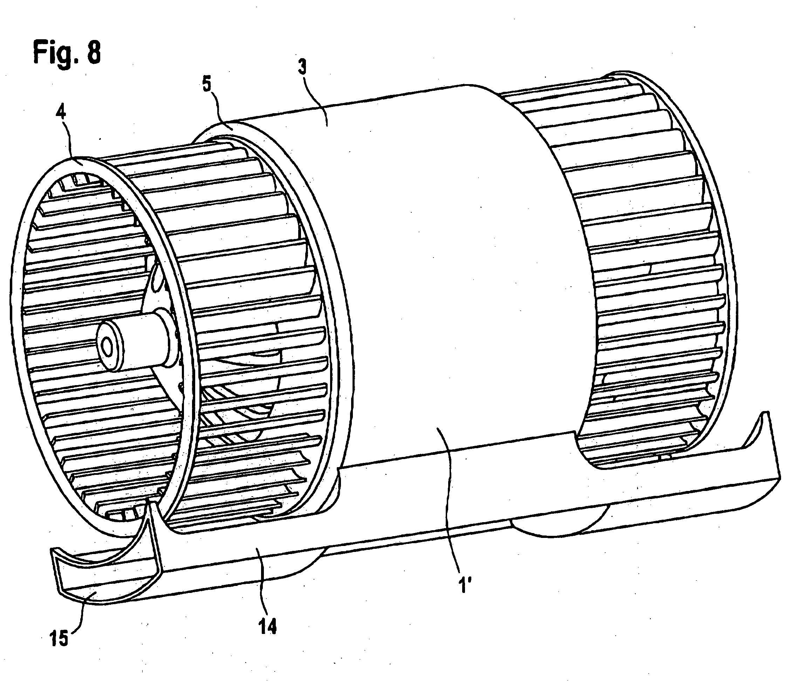

Eine Kraftfahrzeug-Klimaanlage weist eine Doppel-Gebläseanordnung 1 auf, welche gemäß dem vorliegenden Ausführungsbeispiel im Fahrzeuginnenraum angrenzend zum Motorraum angeordnet ist, wobei sie durch eine Abdeckung verdeckt ist. Die Doppel-Gebläseanordnung 1 weist eine Gebläsebaugruppe 1' (vgl. Fig. 8) auf, welche die folgenden Elemente umfasst: eine Führung 2, eine Motorhalterung (nicht dargestellt), einen Gebläsemotor 3 mit einer beidseitig überstehenden Welle und auf derselben angeordneten Laufrädern 4, Dämmmittel, Wände 5 neben den Laufrädern 4 und eine Zentrierung 6. Die Gebläsebaugruppe 1' ist in Richtung der Drehachse der Motorwelle, im Folgenden auch als Y-Richtung und Richtung quer zur normalen Fahrtrichtung des Kraftfahrzeugs bezeichnet, zur Montage und Demontage verschiebbar in einem Gehäuse 7 angeordnet, welches unter anderem die beiden Gebläse-Spiralgehäuse 8 für die Laufräder 4 bildet. An der Gebläsebaugruppe 1' sind eine Stange 9 zur Steuerung von Luftklappen 10, Lufteinlässe 11 mit den über die Stange 9 gesteuerten Luftklappen 10, wobei jeder Lufteinlass 11 den Endbereich eines Frischluftkanals 12 und den Endbereich eines Umluftkanals 13 umfasst. Ferner ist an der Gebläsebaugruppe 1' eine elektrische Kontaktierung für den Gebläsemotor 3 vorgesehen.

Um den Gebläsemotor 3 beispielsweise auf Grund eines Defekts auszutauschen, wird zuerst der entsprechende Bereich des Fahrzeuginnenraums im Kraftfahrzeugs zugänglich gemacht, wobei der Zugang beifahrerseitig angeordnet ist, d.h. bei einem Kraftfahrzeug mit Linkssteuerung rechts der Mittelsäule und bei einem Kraftfahrzeug mit Rechtssteuerung entsprechend links der Mittelsäule. Hierfür wird vorliegend das Handschuhfach und die seitliche Luftführung entfernt. Anschließend wird die Stange 9 von den Luftklappen 10 gelöst und der Lufteinlass 11 der entsprechenden Seite ausgebaut. Nun kann die Gebläsebaugruppe 1' nach einem Herausziehen derselben in Y-Richtung aus dem Gehäuse 7 entnommen werden, so dass eine einfache weitere Demontage des Gebläsemotors 3 möglich ist. Alternativ kann auch die gesamte Gebläsebaugruppe 1' ausgetauscht werden. Hierbei verbleibt das Gehäuse 7 im Kraftfahrzeug, so dass der Zwischenraum zwischen der Wand zum Motorraum und dem Gehäuse 7 beispielsweise ausgeschäumt werden kann. Das Einsetzen der Gebläsebaugruppe 1' erfolgt in umgekehrter Reihenfolge.

Um eine möglichst einfache und exakte Positionierung der Gebläsebaugruppe 1' im Gehäuse 7 zu ermöglichen, ist die Führung 2 in Form einer Nut im Gehäuse 7 und eines entsprechenden in Y-Richtung verlaufenden Vorsprungs 14 an der Gebläsebaugruppe 1' vorgesehen, sowie die Zentrierung 6 für die Lufteinlässe 11 in Form einer seitlichen Vertiefung 15 an den beiden stimseitigen Enden des Vorsprungs 14 vorgesehen, welche mit entsprechenden weiteren Vorsprüngen 16 an den Lufteinlässen 11 zusammenwirken. Da der hintere Lufteinlass 11 im Gehäuse 7 verbleibt, erfolgt ein positionierter Einbau des Gebläsebaugruppe 1' und anschließend ein positionierter Einbau des vorderen Lufteinlasses 11.

Auf Grund des symmetrischen Aufbaus kann die gleiche Doppel-Gebläseanordnung 1 sowohl für Kraftfahrzeuge mit Links- als auch mit Rechtssteuerung verwendet werden.

### B e z u g s z e i c h e n l i s t e

- 1: Doppel-Gebläseanordnung
- 1': Gebläsebaugruppe
- 2: Führung
- 3: Gebläsemotor
- 4: Laufrad
- 5: Wand
- 6: Zentrierung
- 7: Gehäuse
- 8: Gebläse-Spiralgehäuse
- 9: Stange
- 10: Luftklappe
- 11: Lufteinlass
- 12: Frischluftkanal
- 13: Umluftkanal
- 14: Vorsprung
- 15: Vertiefung
- 16: weiterer Vorsprung

## Patentansprüche

1. Doppel-Gebläseanordnung, insbesondere für eine Kraftfahrzeug-Klimaanlage, mit mindestens einem Gebläsemotor(3), zwei auf Wellen angeordneten Laufrädern (4) und dazugehörenden Gebläse-Spiralgehäusen (8), die Teil des Gehäuses (7) sind, und einem Lufteinlass (11), wobei der oder die Gebläsemotoren (3), mit den Laufrädern (4) eine Gebläsebaugruppe (1') bilden, die als Einheit in Längsrichtung der Wellen aus dem Gehäuse (7) entnehmbar sind und am Gehäuse (7) eine Führung (2) ausgebildet ist und die Führung (2) durch eine Nut im Gehäuse (7) und einen Vorsprung (14) an der Gebläsebaugruppe (1') gebildet ist, wobei eine Zentrierung (6) für die Lufteinlässe (11) vorgesehen ist, die durch eine seitliche Vertiefung in der Gebläsebaugruppe (1') gebildet ist, die mit einem Vorsprung(16) an auf der entsprechenden Seite angeordneten Lufteinlass (11) zusammenwirkt.

2. Doppel-Gebläseanordnung nach einem der vorhergehenden Ansprüche, **dadurch gekennzeichnet, dass** die Doppel-Gebläseanordnung spiegelbildlich bezüglich der Mittelebene senkrecht zur Längsrichtung der Wellen ausgebildet ist.

3. Doppel-Gebläseanordnung nach einem der vorhergehenden Ansprüche, **dadurch gekennzeichnet, dass** außerhalb des Gehäuses (7) eine Stange (9) angeordnet ist, mit Hilfe derer Luftklappen (10) in den Luftelnlässen (11) regelbar sind.

4. Kraftfahrzeug-Klimaanlage mit einer Doppel-Gebläseanordnung nach einem der vorhergehenden Ansprüche, wobei, die Doppel-Gebläseanordnung (1) im Fahrzeuginnenraum, verdeckt durch eine Abdeckung, und benachbart zum Motorraum angeordnet ist.

5. Kraftfahrzeug-Klimaanlage nach Anspruch 4, **dadurch gekennzeichnet, dass** die Gebläsebaugruppe (1') nach Entfernen der Abdeckung, Lösen der Stange (9) von den Luftklappen (10) und Entfernen eines der beiden Lufteinlässe (11) der entsprechenden Seite quer zur normalen Fahrtrichtung des Kraftfahrzeugs herausziehbar ist.

## Claims

1. Dual blower unit, in particular for a motor vehicle air-conditioning system, with at least one blower motor (3), two impeller wheels (4) mounted on shafts and the associated spiral blower housings (8), which are part of the housing (7), and with an air inlet (11), wherein together with the said impellers (4) the blower motor or motors (3) form a blower module (1') which can be removed together from the housing (7) in the longitudinal direction of the shafts and a guide (2) is formed on the housing (7) with the guide (2) being formed by a groove in the housing (7) and a projection (14) on the blower module (1') wherein with a centring means (6) being provided for the air inlets (11) which consists of a lateral recess in the blower module (1') which cooperates with a projection (16) arranged on the air inlet (11) on the corresponding side.

2. Dual blower unit according to any of the preceding claims, **characterised in that** the dual blower unit is formed in mirror-image relationship relative to the central plane perpendicular to the longitudinal direction of the shafts.

3. Dual blower unit according to any of the preceding claims, **characterised in that** a rod (9) is arranged outside the housing (7), with the aid of which air flaps (10) in the air inlets (11) can be adjusted.

4. Motor vehicle air-conditioning unit with a dual blower unit according to any of the preceding claims, wherein the dual blower unit (1) being arranged inside the vehicle, concealed by a cover and positioned close to the engine compartment.

5. Motor vehicle air-conditioning unit according to claim 4, **characterised in that** when the said cover is removed, the rod (9) is detached from the air flaps (10) and one of the two air inlets (11) has been removed on the corresponding side, the blower module (1') can be pulled out transversely to the normal driving direction of the motor vehicle.

## Revendications

1. Agencement à double soufflante, en particulier pour un système de climatisation d'un véhicule automobile, comprenant au moins un moteur de soufflante (3), deux roues mobiles (4) disposées sur des arbres, et des carters de soufflante correspondants (8), en spirale, qui font partie du carter (7), et une entrée d'air (11), où le ou les moteur (s) de soufflante (3) forment, avec les roues mobiles (4), un ensemble de soufflante (1') qui, comme bloc unitaire, peut être extrait du carter (7) suivant le sens longitudinal des arbres, et un guidage (2) est configuré sur le carter (7), et le guidage (2) est formé par une rainure dans le carter (7) et par une partie saillante (14) formée sur l'ensemble de soufflante (1'), où il est prévu un centrage (6) pour les entrées d'air (11), lequel centrage est formé par un creux latéral dans l'ensemble de soufflante (1'), creux qui agit de façon conjointe avec une partie saillante (16), sur une entrée d'air (11) disposée sur le côté correspondant.

2. Agencement à double soufflante selon l'une de revendications précédentes, **caractérisé en ce que** l'agencement à double soufflante est configuré suivant une symétrie spéculaire par rapport au plan médian perpendiculaire au sens longitudinal des arbres.

3. Agencement à double soufflante selon l'une ou l'autre des revendications précédentes, **caractérisé en ce qu'**une barre (9) est disposée à l'extérieur du carter (7), barre à l'aide de laquelle des volets d'air (10) sont réglables dans les entrées d'air (11).

4. Système de climatisation d'un véhicule automobile comprenant un agencement à double soufflante selon l'une quelconque des revendications précédentes, où l'agencement à double soufflante (1) est disposé dans l'habitacle du véhicule, en étant recouvert par un cache de protection et placé à proximité du compartiment moteur.

5. Système de climatisation d'un véhicule automobile selon la revendication 4, **caractérisé en ce que** l'ensemble de soufflante (1') peut être extrait après dépose du cache de protection, après détachement de la barre (9) par rapport aux volets d'air (10) et après dépose de l'une des deux entrées d'air (11) du côté correspondant, transversalement par rapport au sens normal de marche du véhicule automobile.
